# EUROPEAN PATENT APPLICATION

(11) **EP 1 749 803 A1**
(43) Date of publication of application: **07.02.2007**
(21) Application number: 05076741.7
(22) Date of filing: 28.07.2005
(51) Int. Cl.: C04B 14/10

(54) **Concrete composition**

(71) Applicant: Eerland Operations B.V., 4191 KK Geldermalsen (NL)
(72) Inventor: Eerland, Dick, 4191 KK Geldermalsen (NL)
(74) Representative: Kupecz, Arpad

(57) **Abstract**

The invention relates to a concrete, comprising a hydraulic binder, water, an aggregate, a mineral admixture and a chemical admixture acting as a superplasticiser, characterized in that said mineral admixture comprises colloidal silica and one or more of kaolin clay, metakaolin clay and montmorillonite clay with a blain value in the range of from 2000 to 8000 cm²/g, preferably from 3000 to 7000 cm²/g, more preferably from 3300 to 6000 cm²/g, still more preferably from 4000 to 5000 cm²/g.

The invention also relates to a method for obtaining such a concrete, comprising the steps of:
(a) mixing the hydraulic binder and clay;
(b) adding a part of the water, in an amount sufficient to obtain an adequately manageable mass;
(c) mixing said chemical admixture with said mass obtained in (b);
(d) adding and mixing the collidal silica and the rest of the water with the mixture obtained in step (c);
(e) mixing in the aggregates; and
(f) hardening the mixture.

## Description

The present invention relates to a concrete. More in particular, the invention relates to a concrete, comprising a hydraulic binder, water, an aggregate, a mineral admixture and a chemical admixture acting as a superplasticiser.

Such concrete is generally known. For example, US 5,932,000 relates to a method for the preparation of a hardening composition, i.e. concrete. According to said publication, the silica added to the composition, needs to fulfil some strict requirements. The particle size distribution is a very important parameter.

Although the concrete obtained according to said publication, provides advantageous results, there still exists a need for an improved concrete. More in particular there exists a need for a concrete that can be made easily, simply and at low costs.

Therefore, according to a first object the present invention aims at providing an improved concrete.

According to another object, the present invention aims at providing a concrete that can be made with relatively cheap compounds.

More in general, the present invention has as an object to provide a concrete with a desirable compressive strength and flexural strength.

So as to obtain at least one of the above identified objects, the present invention provides a concrete as mentioned in the preamble, and that is characterized in that said mineral admixture comprises colloidal silica and one or more of kaolin clay, metakaolin clay and montmorillonite clay with a blain value in the range of from 2000 to 8000 cm²/g.

With a method according to the present invention, a concrete is obtained that has an impressive compressive strength. A compressive strength of well above 100 N/mm², is easily obtainable.

The collidal silica that can be used in accordance with the present invention, is generally known in the art and does not need to fulfil special requirements regarding particle size distribution, like the material known from US 5,932,000. Hence, the materials from which the concrete according to the present invantion is made, are much cheaper. The properties are nevertheless strongly improved.

The blain value of the clay can be determined with an automatical blain value device, for example the Blain-Star ZEB 1330, manufactured by Wasagchemie Synthen GmbH, Germany.

According to the invention, it is especially preferred that the blain value of the clay is in the range of from 3000 to 7000 cm²/g, preferably from 3300-6000 cm²/g, more preferably from 4000-5000 cm²/g. If the blain value is within these limits, the compressive strength can be improved further.

As a further preference, the concrete comprises a superplasticiser, also known as water reducing agent. Preferably, said superplasticizer is comprised of a sulphonated formaldehyde comprising resin or a polycarboxylate compound. The use of such plasticizers is well-known in the art of concrete manufacture. Reference is made to WO 91/12214 and EP 692 465. Examples of superplasticisers that can be used in the present invention are disclosed in those publications, incorporated herein by reference. The advantage of using a superplasticiser is that the total amount of water can be reduced. As a result, the strength of the concrete after hardening is improved when the amount of water is reduced.

According to a further preferred embodiment, the concrete comprises one or more of Portland cement and blast furnace slag cement as hydraulic binder. The use of a blast furnace slag cement partially or completely replacing Portland cement is known in the art. Such a cement consists of ground blast furnace slags that is activated by alkali. For example, sodium hydroxide or sodium carbonate can be used as alkaline activators for said ground blast furnace slags. The blast furnace slag cement and Portland cement are commonly interchangeable. However, if a pigmented concrete is required, the use of white Portland cement is advisable, since blast furnace slag cement has a greyish colour.

According to a further preferred embodiment, the concrete comprises one or more of natural aggregates, recycled aggregates, industrial metal slag aggregates and light weight aggregates, all in the range of 0-4 mm and/or 4-10 mm as aggregate. The amount of the aggregates, not being the light weight aggregates, should be in the range of from 200-450%, based on 100% hydraulic binder. In case light weight aggregates are used, the amount by volume of the light weight aggregates should be comparable with the amount by volume of the aggregates not being the light weight aggregates, if those had been added.

Furthermore is preferred that the concrete has a water : binder ratio of from 0,15-0,45, preferably from 0,20-0,40, still more preferably from 0,24-0,35. Using this amount of water, in combination with the use of a superplasticiser as indicated above, and preferably in an amount of from 2-10%, based on 100% hydraulic binder, yields an improved concrete.

As known in the art, it may be required to add reinforcing fibers or a reinforcing net to the composition from which the concrete is made. These fibers will especially improve the tensile strength of the concrete.

So as to obtain a concrete, having strongly improved strength, compared to the concrete known in the state of the art, it is preferred that said concrete is comprised of:

| | |
|---|---|
| Hydraulic binder | 100% |
| Mineral admixture | 10 - 35% |
| Superplasticiser | 2 - 10% |
| Aggregates | 200 - 450% |
| Water | 15 - 45% |

preferably:

| | |
|---|---|
| Hydraulic binder | 100% |
| Mineral admixture | 11 - 30% |
| Superplasticiser | 3 - 7% |
| Aggregates | 220 - 400% |
| Water | 20 - 40% |

more preferably:

| | |
|---|---|
| Hydraulic binder | 100% |
| Mineral admixture | 12 - 28% |
| Superplasticiser | 3,5 - 6% |
| Aggregates | 250 - 350% |
| Water | 23 - 36% |

wherein all percentages are based on 100% hydraulic binder; with the proviso that if light weight aggregates are used, the amount by volume of light weight aggregates should be comparable with the amount by volume of the aggregates not being the light weight aggregates, if those had been added.

The invention also relates to a method for making a concrete as indicated above, comprising the steps of:
a) mixing the hydraulic binder and clay,
b) adding a part of the water, in an amount sufficient to obtain an adequately manageable mass;
c) mixing said chemical admixture with said mass obtained in b),
d) adding and mixing the colloidal silica and the rest of the water with the mixture obtained in step c),
e) mixing in the aggregates, and
f) hardening the mixture.

This following order of the steps for making the concrete yields a concrete having the improved characteristics.

If a concrete is required that has a preferred colour, a pigment may be added during or after any of steps (a)-(e). If a light colour of the concrete is required, it is preferred that as hydraulic binder, white Portland cement is used.

A man skilled in the art can easily determine the amount of water to be added during step (b). If the amount of water added in step (b) is too high, a very liquid mass will be obtained. If too little water is added, a sticky and not manageable mass will be obtained.

The pigment added, may be added as a dry compound, however it is possible to add the pigment as a dispersion in water. In that case, the amount of water incorporated in this dispersion may be detracted from the amount of water added in steps (b) and (d).

The invention will now be described by means of an example.

### EXAMPLE

In accordance with a method indicated above, a concrete test piece was made and tested. As a binder, ordinary Portland cement was used. The mineral admixture consisted of kaolin clay in an amount of 11%. Colloidal silica was added in an amount of 9%. Polycarboxylate compound, as a superplasticiser, was added in an amount of 4,2%. All above percentages are based on 100% ordinary Portland cement.

As aggregate, normalised sand in a range of 0 - 4 mm, was added in an amount of 300%. Finally, the water : binder ratio was 0,30.

In a second example, the normalised sand was replaced by recycling concrete with same dimensional property values of 0 - 4 mm. The test results are indicated in the following table:

| | | Age of test piece (days) | | |
|---|---|---|---|---|
| Material | Property | 1 | 7 | 28 |
| Normalised sand 0-4 mm | Compression strength (N/mm²) | 30 | 65 | 75 |
| | Flexural strength (N/mm²) | 7 | 10 | 12 |
| | | | | |
| Recycling concrete 0-4 mm | Compression strength (N/mm²) | 20 | 50 | 70 |
| | Flexural strength (N/mm²) | 5 | 8 | 10 |

It is clear that the results obtained by the method, according to the present invention, yield a concrete that has impressively increased compression strength and flexural strength.

Furthermore, the concrete obtained by casting it in a mould with a smooth surface, has a very glassy, shiny and mirror like surface. Such concrete has never been made before. The concrete has a pore free surface. The sound when striking the concrete with a metal key and the look of the concrete, resemble that of a ceramic material. Even on the cast side, no pores or cracks are visible in the surface of the concrete.

Due to the surface of the concrete according to the present invention, it has a very high abrasion resistance, a low water absorption, a very high freeze-thaw resistance, an extremely good chemical resistance, a very high acid resistance, and a high fire resistance. Also, it has no explosion spalling.

Since the concrete, obtained with the present invention, is a self-compacting mass, it does not need compaction energy. It has self-compacting properties.

The invention is not limited to the examples as described above. A man skilled in the art is easily capable of making amendments to the invention as described above. Such amendments all fall within the scope of the present invention.

## Claims

1. Concrete, comprising a hydraulic binder, water, an aggregate, a mineral admixture and a chemical admixture acting as a superplasticiser, **characterized in that** said mineral admixture comprises colloidal silica and one or more of kaolin clay, metakaolin clay and montmorillonite clay with a blain value in the range of from 2000 to 8000 cm²/g.

2. Concrete, in accordance with claim 1, **characterized in that** the blain value of the clay is in the range of from 3000 to 7000 cm²/g, preferably from 3300-6000 cm²/g, more preferably from 4000-5000 cm²/g.

3. Concrete, in accordance with claims 1 or 2, **characterized in that** said superplasticiser is comprised of a sulphonated formaldehyde comprising resin or a polycarboxylate compound.

4. Concrete, in accordance with any of claims 1-3, **characterized in that** it comprises one or more of Portland cement and blast furnace slag cement as hydraulic binder

5. Concrete, in accordance with any of claims 1-4, **characterized in that** it comprises one or more of natural aggregates, recycled aggregates, industrial metal slag aggregates and light weight aggregates, all in the range of 0-4 mm and 4-10 mm as aggregate.

6. Concrete, in accordance with any of claims 1-5, **characterized in that** it has a water : binder ratio of from 0,15-0,45, preferably from 0,20-0,40, more preferably 0,24-0,35.

7. Concrete, in accordance with any of claims 1-6, **characterized in that** it is comprised of:
| | |
|---|---|
| Hydraulic binder | 100% |
| Mineral admixture | 10 - 35% |
| Superplasticiser | 2 - 10% |
| Aggregates | 200 - 450% |
| Water | 15 - 45% |
preferably:
| | |
|---|---|
| Hydraulic binder | 100% |
| Mineral admixture | 11 - 30% |
| Superplasticiser | 3 - 7% |
| Aggregates | 220 - 400% |
| Water | 20 - 40% |
more preferably:
| | |
|---|---|
| Hydraulic binder | 100% |
| Mineral admixture | 12 - 28% |
| Superplasticiser | 3,5 - 6% |
| Aggregates | 250 - 350% |
| Water | 23 - 36% |
wherein all percentages are based on 100% hydraulic binder; with the proviso that if light weight aggregates are used, the amount by volume of light weight aggregates should be comparable with the amount by volume of the aggregates not being the light weight aggregates, if those had been added.

8. A method for making a concrete material, in accordance with any of claims 1-7, **characterized in that** it comprises the steps of:
(a) mixing the hydraulic binder and clay,
(b) adding a part of the water, in an amount sufficient to obtain an adequately manageable mass;
(c) mixing said chemical admixture with said mass obtained in b),
(d) adding and mixing the colloidal silica and the rest of the water with the mixture obtained in step c),
(e) mixing in the aggregates, and
(f) hardening the mixture.

9. A method according to claim 8, **characterized in that** a pigment is added during or after any of steps a) - e).

10. Concrete with a shiny surface, obtainable by a method according to any of claims 8 and 9 in a mould with a smooth surface.
